# EUROPÄISCHE PATENTSCHRIFT

(11) **EP 2 540 558 B1**
(45) Veröffentlichungstag und Bekanntmachung des Hinweises auf die Patenterteilung: **03.08.2016**
(21) Anmeldenummer: 12172744.0
(22) Anmeldetag: 20.06.2012
(51) Int. Cl.: B60N 2/02, B60N 2/44, B60N 2/62

(54) **Einrichtung zur Sitzbreitenverstellung für einen Kraftfahrzeugsitz**
Device for adjusting the width of a motor vehicle seat
Dispositif de réglage de la largeur du siège d'un véhicule automobile

(30) Priorität: 27.06.2011 DE 102011078122
(43) Veröffentlichungstag der Anmeldung: 02.01.2013
(73) Patentinhaber: Deere & Company, Moline, IL 61265 (US)
(72) Erfinder: Blind, Alan, 69488 Birkenau (DE); Rehn, Jeremias, 71155 Altdorf (DE)
(74) Vertreter: Dehnhardt, Florian Christopher

(56) Entgegenhaltungen:
- DE-A1- 4 339 114
- DE-A1-102006 020 671

## Beschreibung

Die Erfindung betrifft eine Einrichtung zur Sitzbreitenverstellung für einen Kraftfahrzeugsitz, mit einem ersten Verstellelement und einem zweiten Verstellelement, wobei sich ein zwischen den beiden Verstellelementen vorgesehener Abstand mittels einer Betätigungseinrichtung verändern lässt.

Ein in seiner Breite verstellbarer, gattungsgemässer Fahrersitz für ein Kraftfahrzeug ist beispielsweise aus der DE 10 2006 020 671 A1 bekannt. Der Sitz weist zwei Sitzhälften auf, deren Abstand zueinander mittels eines Spindelantriebs veränderbar ist. Ein elastisches Zwischenelement dient der Überbrückung eines zwischen den beiden Sitzhälften mit zunehmendem Abstand größer werdenden Spalts. Die im Allgemeinen unterschiedliche Nachgiebigkeit des flexiblen Zwischenelements einerseits sowie der angrenzenden Sitzhälften andererseits kann zu einem inhomogenen Belastungsverhalten der Sitzfläche und damit zu unerwünschten Beeinträchtigungen des Sitzkomforts führen.

Es ist daher Aufgabe der vorliegenden Erfindung, eine bezüglich ihres Sitzkomforts verbesserte Einrichtung zur Sitzbreitenverstellung für einen Kraftfahrzeugsitz anzugeben.

Diese Aufgabe wird durch eine Einrichtung zur Sitzbreitenverstellung mit den Merkmalen des Patentanspruchs 1 gelöst.

Die Einrichtung zur Sitzbreitenverstellung für einen Kraftfahrzeugsitz umfasst ein erstes Verstellelement und ein zweites Verstellelement, wobei sich ein zwischen den beiden Verstellelementen vorgesehener Abstand mittels einer Betätigungseinrichtung verändern lässt. Erfindungsgemäß ist jedem der Verstellelemente ein Führungselement zugeordnet, entlang dessen ein zwischen den beiden Verstellelementen verlaufendes flächenhaftes Materialstück derart gleitend gespannt ist, dass sich ein eine Sitzfläche bildender Anteil des flächenhaften Materialstücks durch Veränderung des Abstands der beiden Verstellelemente anpassen lässt. Mit anderen Worten besteht die gesamte Sitzfläche aus ein und demselben Material, sodass mögliche Beeinträchtigungen des Sitzkomforts aufgrund eines inhomogenen Belastungsverhaltens der Sitzfläche von vornherein ausgeschlossen werden können.

Vorteilhafte Ausführungen der erfindungsgemäßen Einrichtung zur Sitzbreitenverstellung gehen aus den Unteransprüchen hervor.

Vorzugsweise handelt es sich bei dem flächenhaften Materialstück um ein textiles Unterfederungsgewebe. Dem textilen Unterfederungsgewebe lässt sich durch entsprechende Vorgabe des Faserverlaufs sowie der Fasereigenschaften gezielt ein gewünschtes Belastungsverhalten aufprägen. Das textile Unterfederungsgewebe ist insbesondere als atmungsaktives Funktionsgewebe ausgebildet.

Auf dem textilen Unterfederungsgewebe kann ein aus einem Abstandsgewirke bestehendes Sitz- und/oder Rückenpolster angebracht sein. Das Sitz- und/oder Rückenpolster ist beispielsweise mittels Klettverschlüssen abnehmbar auf der durch das flächenhafte Materialstück gebildeten Sitzfläche befestigt. Bei dem Abstandsgewirke handelt es sich um ein dreidimensionales Textilgewebe, bei dem zwei gegenüberliegende textile Außenflächen durch abstandshaltende Verbindungsfäden auf Distanz gehalten werden. Der charakteristische Aufbau des Abstandsgewirkes führt nicht nur zu einer verbesserten Feuchtigkeitsableitung und Luftdurchlässigkeit eines damit ausgestatteten Sitz- und/oder Rückenpolsters, sondern auch zu einem definierten elastischen Verhalten in Längs- und Querrichtung.

Des Weiteren besteht die Möglichkeit, dass das flächenhafte Materialstück inelastisch ausgebildet und mittels mehrerer Zugfedern gespannt ist. Die Zugfedern sind beispielsweise mit einem Grundrahmen des Kraftfahrzeugsitzes verbunden. Durch Austausch der Zugfedern lässt sich die Nachgiebigkeit der Sitzfläche auch nachträglich an unterschiedliche Fahrergewichte und Sitzgewohnheiten anpassen.

Erfindungsgemäss sind die beiden Verstellelemente zur Veränderung des Abstands zueinander verschwenkbar angeordnet. Die Verstellelemente sind hierzu mittels entsprechender Drehgelenke an einem Grundrahmen des Kraftfahrzeugsitzes angebracht. Die Verwendung von Drehgelenken führt zu einem besonders kompakten und robusten Aufbau der Betätigungseinrichtung. In einer nicht beanspruchten Ausführungsform können die Verstellelemente zur Veränderung des Abstands zueinander längsverschiebbar angeordnet sein. In diesem Fall kann eine beim Verschwenken der Verstellelemente zwangsläufig auftretende Höhenänderung der Sitzfläche vermieden oder zumindest reduziert werden.

Die Verstellelemente können ferner als im Wesentlichen L-förmige Betätigungsschenkel ausgebildet sein, wobei im Bereich eines ersten Schenkelendes das Führungselement und im Bereich eines zweiten Schenkelendes ein mit einem Grundrahmen des Kraftfahrzeugsitzes verbundenes Drehgelenk angeordnet ist. Das Drehgelenk ist zum Verschwenken des Verstellelements mittels der Betätigungseinrichtung anlenkbar, wobei die aufgrund der L-förmigen Ausbildung der Betätigungsschenkel gegebenen Hebelverhältnisse ein Verschwenken des Verstellelements begünstigen.

Zur Anlenkung des Drehgelenks kann die Betätigungseinrichtung einen an dem Drehgelenk angreifenden Betätigungsgeber umfassen, der mittels eines manuell und/oder elektromotorisch betätigbaren Spindelantriebs zusammenwirkt. Genauer gesagt kann der Betätigungsgeber eine quer zur Verstellrichtung drehbar gelagerte Gewindebuchse aufweisen, in die eine von dem Spindelantrieb umfasste Gewindespindel eingreift. Die Gewindespindel steht ihrerseits mit einer Handkurbel und/oder einem Elektromotor zur Sitzbreitenverstellung in Verbindung.

Um ein gegensinniges Verschwenken der beiden Betätigungsschenkel zu ermöglichen, kann die Betätigungseinrichtung für jeden der beiden Betätigungsschenkel einen eigenen Betätigungsgeber aufweisen. Der Spindelantrieb umfasst in diesem Fall zwei gegenläufig ausgebildete Gewindespindelabschnitte.

Das Führungselement ist beispielsweise als quer zur Verstellrichtung orientierter Gleitstab ausgebildet. Zur Erhöhung der Verwindungssteifigkeit ist es denkbar, dass für jedes der beiden Verstellelemente eine paarweise Anordnung der Betätigungsschenkel vorgesehen ist, wobei der Gleitstab die beiden Betätigungsschenkel brückenförmig im Bereich des ersten Schenkelendes miteinander verbindet. Des Weiteren kann ein die beiden Betätigungsschenkel im Bereich des zweiten Schenkelendes verbindender Drehstab vorgesehen sein, der derart an einem Grundrahmen des Kraftfahrzeugsitzes gelagert ist, dass dieser ein Drehgelenk zum Verschwenken des Verstellelements bildet.

Um der durch das flächenhafte Materialstück gebildeten Sitzfläche einen ergonomischen Oberflächenverlauf aufzuprägen, besteht die Möglichkeit, dass der Gleitstab einen nach außen gebogenen Verlauf aufweist. Ein derartiger Verlauf führt zu einer sitzmuldenartigen Ausformung der durch das flächenhafte Materialstück gebildeten Sitzfläche.

Die erfindungsgemäße Einrichtung zur Sitzbreitenverstellung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Ansicht eines Ausführungsbeispiels der erfindungsgemäßen Einrichtung zur Sitzbreitenverstellung für einen Kraftfahrzeugsitz, und
- Fig. 2: eine Schnittdarstellung des in Fig. 1 wiedergegebenen Ausführungsbeispiels der erfindungsgemäßen Einrichtung zur Sitzbreitenverstellung.

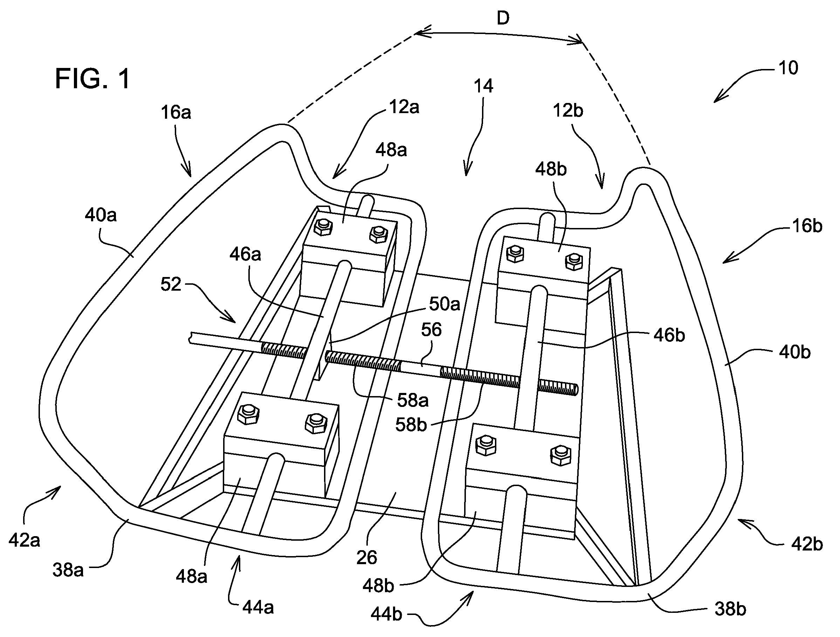

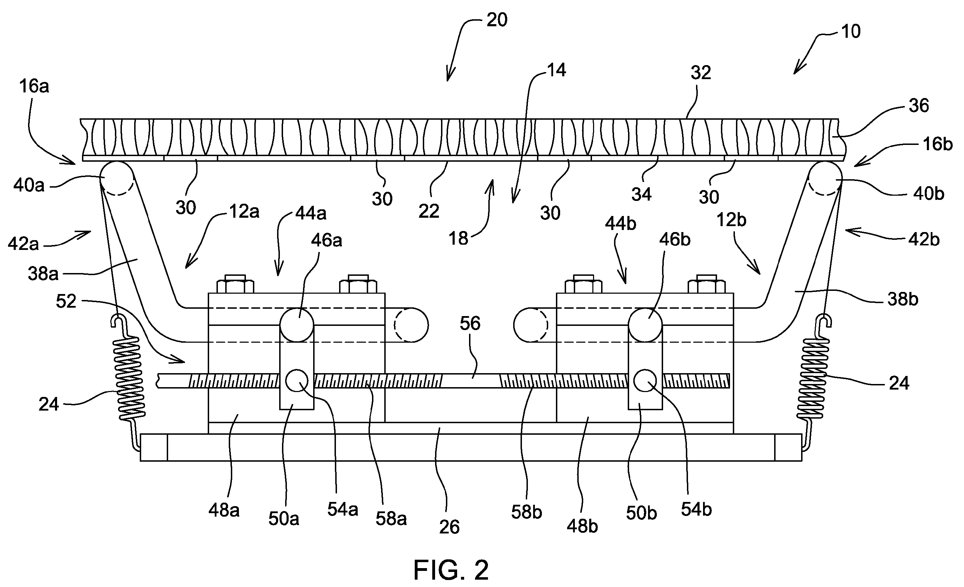

Fig. 1 zeigt eine perspektivische Ansicht eines Ausführungsbeispiels der erfindungsgemäßen Einrichtung zur Sitzbreitenverstellung für einen Kraftfahrzeugsitz, deren Darstellung im Schnitt in Fig. 2 wiedergegeben ist.

Die Einrichtung 10 zur Sitzbreitenverstellung für einen Kraftfahrzeugsitz umfasst ein erstes Verstellelement 12a und ein zweites Verstellelement 12b. Ein zwischen den beiden Verstellelementen 12i (i = a, b) vorgesehener Abstand D lässt sich mittels einer Betätigungseinrichtung 14 verändern. Jedem der Verstellelemente 12i ist ein Führungselement 16i zugeordnet, entlang dessen ein zwischen den beiden Verstellelementen 12i verlaufendes flächenhaftes Materialstück 18 derart gleitend gespannt ist, dass sich ein eine Sitzfläche 20 bildender Anteil des flächenhaften Materialstücks 18 durch Veränderung des Abstands D der beiden Verstellelemente 12i anpassen lässt. Das flächenhafte Materialstück 18 ist aus Gründen der Darstellbarkeit der darunter befindlichen Komponenten in Fig. 1 weggelassen, sodass in diesem Zusammenhang auf die Schnittdarstellung gemäß Fig. 2 verwiesen sei.

Im vorliegenden Fall handelt es sich bei dem flächenhaften Materialstück 18 um ein textiles Unterfederungsgewebe 22, insbesondere ein atmungsaktives Funktionsgewebe. Das textile Unterfederungsgewebe 22 ist inelastisch ausgebildet und mittels mehrerer Zugfedern 24 gespannt. Die Zugfedern 24 sind mit einem Grundrahmen 26 des Kraftfahrzeugsitzes verbunden.

Auf dem die Sitzfläche 20 bildendenden Anteil des textilen Unterfederungsgewebes 22 ist ein aus einem Abstandsgewirke 28 bestehendes Sitz- und/oder Rückenpolster mittels mehrerer Klettverschlüsse 30 abnehmbar befestigt. Bei dem Abstandsgewirke 28 handelt es sich um ein dreidimensionales Textilgewebe, bei dem zwei gegenüberliegende textile Außenflächen 32 und 34 durch abstandshaltende Verbindungsfäden 36 auf Distanz gehalten werden. Das Abstandsgewirke 28 ist mittels eines nicht dargestellten Polsterbezugs schützend umgeben.

Die beiden Verstellelemente 12i sind zur Veränderung des Abstands D zueinander verschwenkbar angeordnet. Beispielsgemäß sind die Verstellelemente 12i als im Wesentlichen L-förmige Betätigungsschenkel 38i und die Führungselemente 16i als quer zur Verstellrichtung orientierte Gleitstäbe 40i ausgebildet. Die Gleitstäbe 40i weisen einen nach außen gebogenen Verlauf auf.

Zur Erhöhung der Verwindungssteifigkeit ist für jedes der beiden Verstellelemente 12i eine paarweise Anordnung der Betätigungsschenkel 38i vorgesehen, wobei ein jeweiliger Gleitstab 40i die beiden Betätigungsschenkel 38i brückenförmig im Bereich erster Schenkelenden 42i miteinander verbindet. Des Weiteren ist ein die beiden Betätigungsschenkel 38i im Bereich zweiter Schenkelenden 44i jeweils verbindender Drehstab 46i vorgesehen. Der Drehstab 46i ist derart mittels zugehöriger Halter 48i an dem Grundrahmen 26 des Kraftfahrzeugsitzes gelagert, dass ein mittels der Betätigungseinrichtung 14 anlenkbares Drehgelenk zum Verschwenken des Verstellelements 12i gebildet wird.

Zur Anlenkung des Drehgelenks umfasst die Betätigungseinrichtung 14 für jeden der beiden Betätigungsschenkel 38i einen eigenen, an dem jeweiligen Drehgelenk angreifenden Betätigungsgeber 50i, der mittels eines manuell und/oder elektromotorisch betätigbaren Spindelantriebs 52 zusammenwirkt, wobei die Betätigungsgeber 50i eine quer zur Verstellrichtung drehbar gelagerte Gewindebuchse 54i aufweisen, in die eine von dem Spindelantrieb 52 umfasste Gewindespindel 56 eingreift. Die Gewindespindel 56 steht ihrerseits mit einer Handkurbel und/oder einem Elektromotor zur Sitzbreitenverstellung in Verbindung.

Um ein gegensinniges Verschwenken der beiden Betätigungsschenkel 38i zu ermöglichen, umfasst der Spindelantrieb 52 zwei gegenläufig ausgebildete Gewindespindelabschnitte 58i, sodass je nach Drehrichtung der Gewindespindel 56 der Abstand zwischen den beiden Betätigungsgebern 50i und damit der Abstand D zwischen den beiden Verstellelementen 12i zu- oder abnimmt.

## Patentansprüche

1. Einrichtung zur Sitzbreitenverstellung für einen Kraftfahrzeugsitz, mit einem ersten Verstellelement (12a) und einem zweiten Verstellelement (12b), wobei sich ein zwischen den beiden Verstellelementen (12a, 12b) vorgesehener Abstand (D) mittels einer Betätigungseinrichtung (14) verändern lässt, wobei jedem der Verstellelemente (12a, 12b) ein Führungselement (16a, 16b) zugeordnet ist, **dadurch gekennzeichnet, dass** entlang des Führungselementes ein zwischen den beiden Verstellelementen (12a, 12b) verlaufendes flächenhaftes Materialstück (18) derart gleitend gespannt ist, dass sich ein eine Sitzfläche (20) bildender Anteil des flächenhaften Materialstücks (18) durch Veränderung des Abstands (D) der beiden Verstellelemente (12a, 12b) anpassen lässt, und die beiden Verstellelemente (12a, 12b) zur Veränderung des Abstands (D) zueinander verschwenkbar angeordnet sind.

2. Sitzbreitenverstellung nach Anspruch 1, **dadurch gekennzeichnet, dass** es sich bei dem flächenhaften Materialstück (18) um ein textiles Unterfederungsgewebe (22) handelt.

3. Sitzbreitenverstellung nach Anspruch 2, **dadurch gekennzeichnet, dass** auf dem textilen Unterfederungsgewebe (22) ein aus einem Abstandsgewirke (28) bestehendes Sitz- und/oder Rückenpolster angebracht ist.

4. Sitzbreitenverstellung nach einem der Ansprüche 1 bis 3, **dadurch gekennzeichnet, dass** das flächenhafte Materialstück (18) inelastisch ausgebildet und mittels mehrerer Zugfedern (24) gespannt ist.

5. Sitzbreitenverstellung nach einem der Ansprüche 1 bis 4, **dadurch gekennzeichnet, dass** die Verstellelemente (12a, 12b) als im Wesentlichen L-förmige Betätigungsschenkel (38a, 38b) ausgebildet sind, wobei im Bereich eines ersten Schenkelendes (42a, 42b) das Führungselement (16a, 16b) und im Bereich eines zweiten Schenkelendes (44a, 44b) ein mit einem Grundrahmen (26) des Kraftfahrzeugsitzes verbundenes Drehgelenk angeordnet ist.

6. Sitzbreitenverstellung nach Anspruch 5, **dadurch gekennzeichnet, dass** die Betätigungseinrichtung (14) einen an dem Drehgelenk angreifenden Betätigungsgeber (50a, 50b) umfasst, der mittels eines manuell und/oder elektromotorisch betätigbaren Spindelantriebs (52) zusammenwirkt.

7. Sitzbreitenverstellung nach einem der Ansprüche oder 6, **dadurch gekennzeichnet, dass** die Betätigungseinrichtung (14) für jeden der beiden Betätigungsschenkel (38a, 38b) einen eigenen Betätigungsgeber (50a, 50b) aufweist.

8. Sitzbreitenverstellung nach einem der Ansprüche 1 bis 7, **dadurch gekennzeichnet, dass** das Führungselement (16a, 16b) als quer zur Verstellrichtung orientierter Gleitstab (40a, 40b) ausgebildet ist.

9. Sitzbreitenverstellung nach Anspruch 8, **dadurch gekennzeichnet, dass** der Gleitstab (40a, 40b) einen nach außen gebogenen Verlauf aufweist.

## Claims

1. Device for adjusting the seat width of a motor vehicle seat, with a first adjustment element (12a) and a second adjustment element (12b), wherein a distance (D) provided between the two adjustment elements (12a, 12b) can be changed by means of an actuating device (14), wherein each of the adjustment elements (12a, 12b) is assigned a guide element (16a, 16b), **characterized in that** an extensive piece of material (18) running between the two adjustment elements (12a, 12b) is clamped in a sliding manner along the guide element such that a portion of the extensive piece of material (18) forming a seat surface (20) can be adapted by changing the distance (D) between the two adjustment elements (12a, 12b), and the two adjustment elements (12a, 12b) are arranged pivotably in order to change the distance (D) from each other.

2. Seat width adjustment according to Claim 1, **characterized in that** the extensive piece of material (18) is a textile resilient support fabric (22).

3. Seat width adjustment according to Claim 2, **characterized in that** a seat cushion and/or back cushion composed of a spacer knit (28) is mounted on the textile resilient support fabric (22).

4. Seat width adjustment according to one of Claims 1 to 3, **characterized in that** the extensive piece of material (18) is formed inelastically and is clamped by means of a plurality of tension springs (24).

5. Seat width adjustment according to one of Claims 1 to 4, **characterized in that** the adjustment elements (12a, 12b) are designed as substantially L-shaped actuating limbs (38a, 38b), wherein the guide element (16a, 16b) is arranged in the region of a first limb end (42a, 42b) and a rotary joint which is connected to a basic frame (26) of the motor vehicle seat is arranged in the region of a second limb end (44a, 44b).

6. Seat width adjustment according to Claim 5, **characterized in that** the actuating device (14) comprises an actuating transmitter (50a, 50b) which acts on the rotary joint and interacts by means of a spindle drive (52) which is actuable manually and/or by electric motor.

7. Seat width adjustment according to either of Claims 5 and 6, **characterized in that** the actuating device (14) has a dedicated actuating transmitter (50a, 50b) for each of the two actuating limbs (38a, 38b).

8. Seat width adjustment according to one of Claims 1 to 7, **characterized in that** the guide element (16a, 16b) is designed as a sliding bar (40a, 40b) which is oriented transversely with respect to the adjustment direction.

9. Seat width adjustment according to Claim 8, **characterized in that** the sliding bar (40a, 40b) has an outwardly curved profile.

## Revendications

1. Dispositif de réglage de largeur de siège pour un siège de véhicule automobile, comprenant un premier élément de réglage (12a) et un deuxième élément de réglage (12b), une distance (D) prévue entre les deux éléments de réglage (12a, 12b) pouvant être modifiée au moyen d'un dispositif d'actionnement (14), un élément de guidage (16a, 16b) étant associé à chacun des éléments de réglage (12a, 12b), **caractérisé en ce que**, le long de l'élément de guidage, une pièce de matériau (18) plane s'étendant entre les deux éléments de réglage (12a, 12b) est tendue de manière glissante de telle sorte qu'une partie de la pièce de matériau plane (18) formant une surface de siège (20) puisse s'adapter par modification de la distance (D) des deux éléments de réglage (12a, 12b) et les deux éléments de réglage (12a, 12b) sont disposés de manière à pouvoir pivoter l'un par rapport à l'autre pour modifier la distance (D).

2. Réglage de largeur de siège selon la revendication 1, **caractérisé en ce que** la pièce de matériau plane (18) est un tissu textile de support (22).

3. Réglage de largeur de siège selon la revendication 2, **caractérisé en ce qu'**un rembourrage de siège et/ou de dossier constitué d'un tricot d'espacement (28) est monté sur le tissu textile de support (22).

4. Réglage de largeur de siège selon l'une quelconque des revendications 1 à 3, **caractérisé en ce que** la pièce de matériau plane (18) est réalisée sous forme inélastique et est tendue au moyen de plusieurs ressorts de traction (24).

5. Réglage de largeur de siège selon l'une quelconque des revendications 1 à 4, **caractérisé en ce que** les éléments de réglage (12a, 12b) sont réalisés sous forme de branches d'actionnement essentiellement en forme de L (38a, 38b), une articulation pivotante connectée à un cadre de base (26) du siège de véhicule automobile étant disposée dans la région d'une première extrémité de branche (42a, 42b) de l'élément de guidage (16a, 16b) et dans la région d'une deuxième extrémité de branche (44a, 44b).

6. Réglage de largeur de siège selon la revendication 5, **caractérisé en ce que** le dispositif d'actionnement (14) comprend un détecteur d'actionnement (50a, 50b) s'engageant avec l'articulation pivotante, lequel coopère au moyen d'un entraînement à broche (52) pouvant être actionné manuellement et/ou par un moteur électrique.

7. Réglage de largeur de siège selon l'une quelconque des revendications 5 ou 6, **caractérisé en ce que** le dispositif d'actionnement (14) présente un détecteur d'actionnement propre (50a, 50b) pour chacune des deux branches d'actionnement (38a, 38b).

8. Réglage de largeur de siège selon l'une quelconque des revendications 1 à 7, **caractérisé en ce que** l'élément de guidage (16a, 16b) est réalisé sous forme de barre glissante (40a, 40b) orientée transversalement à la direction de réglage.

9. Réglage de largeur de siège selon la revendication 8, **caractérisé en ce que** la barre glissante (40a, 40b) présente une allure courbée vers l'extérieur.
